# EUROPÄISCHE PATENTSCHRIFT

(11) **EP 4 494 198 B1**
(45) Veröffentlichungstag und Bekanntmachung des Hinweises auf die Patenterteilung: **06.05.2026**
(21) Anmeldenummer: 23728728.9
(22) Anmeldetag: 24.05.2023
(51) Int. Cl.: H01M 8/2404, H01M 10/04

(54) **VORRICHTUNG ZUR HERSTELLUNG VON MODULEN ODER VORSTUFEN VON MODULEN**
DEVICE FOR PRODUCING MODULES OR PRECURSORS OF MODULES
DISPOSITIF DE PRODUCTION DE MODULES OU DE PRÉCURSEURS DE MODULES

(30) Priorität: 17.06.2022 DE 102022115207
(43) Veröffentlichungstag der Anmeldung: 22.01.2025
(73) Patentinhaber: MB Automation GmbH & Co. KG, 93426 Roding (DE)
(72) Erfinder: BUSOV, Dmitry, 94333 Geiselhoering (DE)
(74) Vertreter: Schmidt, Steffen J.
(86) Internationale Anmeldenummer: PCT/EP2023/063892
(87) Internationale Veröffentlichungsnummer: WO 2023/241892

(56) Entgegenhaltungen:
- EP-A1- 2 696 421
- EP-A1- 3 826 091
- US-A1- 2015 162 638
- US-A1- 2021 202 976

## Beschreibung

### Hintergrund

Hier werden eine Vorrichtung und ein Verfahren zur Herstellung von Modulen oder Vorstufen von Modulen offenbart. Diese Module oder Vorstufen von Modulen können Lagenmaterial enthaltende Brennstoff- oder Batterie-Zellen sein. Details hierzu sind in den Ansprüchen definiert. Auch die Beschreibung enthält relevante Angaben zur Struktur und zur Funktionsweise sowie zu Varianten der Vorrichtung und des Verfahrens.

### Stand der Technik

Die WO 2021 171 946 A1 betrifft einen Stapeltisch, auf dem Laminatstapel aus Trennfolien und Elektrodenlage gestapelt werden. Eine Transporteinheit dient zum Transportieren der Trennfolien und Elektrodenlage und zum Ablegen auf dem Stapeltisch. Die obige Prüfvorrichtung prüft die Position der Elektrodenlage in den von der Transporteinheit freigegebenen Laminatstapeln.

Die JP 2014 078464 A betrifft eine Laminiermaschine zur Herstellung eines laminierten Körpers aus einer rechteckigen Folie als positive Elektrode, einer rechteckigen Folie als negative Elektrode, die abwechselnd laminiert werden über eine rechteckige Trennfolie. Ein Förderer dient zum aufeinanderfolgenden Aufnehmen und Fördern der Kathodenfolie, der Anodenfolie und der Trennfolie zu einer vorbestimmten Stapelposition und zum Ausrichten und Stapeln der Kathodenfolie, der Anodenfolie und der Trennfolie an der Stapelposition. Vier erste Halteelemente sind an den vier Ecken des an der Stapelposition zu stapelnden laminierten Körpers angeordnet und dienen dazu, die vier Ecken der Kathodenfolie, die von dem Förderer zu der Stapelposition transportiert und dort platziert werden, oder die vier Ecken der Trennfolie, die von dem Förderer zu der Stapelposition transportiert und dort platziert werden, von oben zu drücken, um sie unter der Kathodenfolie zu stapeln. Erste horizontale Verschiebungseinrichtungen können die Position der ersten Halteelemente in horizontaler Richtung von einer zurückgezogenen Position zumindest außerhalb der Kathodenfolie oder der Trennfolie zu einer Halteposition verschieben, die den vier Ecken der Kathodenfolie oder der Trennfolie entspricht. Ein erstes Mittel zur Verschiebung in vertikaler Richtung dient dazu, die Position des ersten Halteelements in vertikaler Richtung von einer gelösten Position, die zumindest nach oben hin von der Kathodenfolie oder der Trennfolie getrennt ist, in eine Kontaktposition zu verschieben, die in der Lage ist, die Kathodenfolie oder die Trennfolie zu berühren. Vier zweite Halteelemente sind an den vier Ecken des an der Stapelposition zu stapelnden laminierten Körpers vorgesehen, um von oben die vier Ecken der an der Stapelposition befindlichen negativen Elektrodenfolie oder die vier Ecken der der an der Stapelposition befindlichen Trennfolie zu drücken, um unter die negative Elektrodenfolie gestapelt zu werden. Zweite horizontale Verschiebungseinrichtungen dienen dazu, die Position der zweiten Halteelemente in horizontaler Richtung von einer Rückzugsposition zumindest außerhalb der Anodenfolie oder der Trennfolie in eine Halteposition zu verschieben, die den vier Ecken der Anodenfolie oder der Trennfolie entspricht. Die zweiten Verschiebungseinrichtungen zur Verschiebung in vertikaler Richtung dienen dazu, die Position des zweiten Halteelements in vertikaler Richtung von einer Position, die zumindest nach oben von der Anodenfolie oder der Trennfolie getrennt ist, in eine Kontaktposition zu verschieben, in der das zweite Halteelement die Anodenfolie oder die Trennfolie berührt. Wenn eine neue Kathodenfolie, Anodenfolie oder Trennfolie heran gefördert und in die Stapelposition gebracht wird, wird die neu platzierte Kathodenfolie, Anodenfolie oder die Trennfolie niedergehalten, und die vier Ecken der bereits darunter platzierten Kathodenfolie, Anodenfolie oder der Trennfolie niedergehalten. Nachdem die vier ersten oder zweiten Halteelemente herausgezogen wurden, werden die vier Ecken der neu platzierten Kathodenfolie, Anodenfolie oder der Trennfolie von den entsprechenden vier ersten oder zweiten Halteelementen festgehalten. Die vier Ecken der neu platzierten Kathodenfolie, Anodenfolie oder des Separators werden durch vier entsprechende erste oder zweite Halteelemente gedrückt. Die Höhe der ersten und zweiten Halteelemente, wenn sie sich von der Halteposition in die Halteposition bewegen, ist so eingestellt, dass sie höher ist als die Höhe der ersten und zweiten Halteelemente, wenn sie von der Halteposition in die Rückzugsposition zurückkehren. Die Hubwege der Halteelemente sind beim Niederhalten der Kathodenfolie, der Anodenfolie oder der Trennfolie bei der Bewegung von der Halteposition in die Rückzugsposition höher als die Hubwege bei der Bewegung von der Halteposition in die Rückzugsposition.

Die WO 2021 171 946 A1 betrifft eine Prüfvorrichtung zum Prüfen der Position der Elektrodenlage in einem Laminat, in dem eine Trennfolie und eine Elektrodenlage durch einen Klebstoff gebunden sind, von der Trennfolienseite aus. Ein Infrarot-Strahler bestrahlt das Laminat von der Trennfolienseite aus mit Infrarotlicht. Eine für Infrarotlicht empfindliche Kamera nimmt das durch die Trennfolie hindurchgelassene und von der Elektrodenlage reflektierte Infrarotlicht auf. Eine Erfassungseinheit erfasst die Position der Elektrodenlage auf der Grundlage des von der Kamera aufgenommenen Bildes.

Darüber hinaus wird nach dem Stand der Technik das bewegliche Mittel horizontal bewegt, um die Elektrodenplatte auf einer Oberfläche des Separators zu berühren, und dann dreht sich das bewegliche Mittel, um die andere Oberfläche des Separators zu dem an der Seite des Befestigungsmittels befestigten Zellenstapel zu bewegen, und zwar regelmäßig während des Prozesses. Die Spannung des Separators ist variabel. Daher kann die Herstellung weniger effizienter werden, weil die Trennfolie zu dem Zeitpunkt, an dem die Trennfolie während des Prozesses straffgezogen wird, reißen kann. Somit kann die Elektrodenplatte nicht an der exakten Stelle der Trennmembran zu dem Zeitpunkt gestapelt werden, an dem die Trennfolie während des Prozesses gelockert wird. Die gleichbleibende Qualität des Zellstapels stellt dort ein schwer zu lösendes Problem dar.

Die WO 2020 130 184 A1 beschreibt die Herstellung eines Zellenstapels einer Sekundärbatterie. Ein Stapeltisch ist hin- und her bewegbar. Eine Separator-Zuführeinheit ist auf dem Stapeltisch positioniert und führt einen Separator dem Stapeltisch zu. Ein erster Mehrfachkopf ist auf einer Seite des Stapeltisches vorgesehen und stapelt eine Lage nach der anderen, indem er die Elektroden-Lagen auf dem zu einer Seite bewegten Stapeltisch ablegt. Ein zweiter Mehrfachkopf ist auf der anderen Seite des Laminierungstisches vorgesehen ist und stapelt die Elektroden-Lagen auf dem zur anderen Seite bewegten Stapeltisch.

### Technisches Problem

Ausgehend von dieser Situation soll eine kostengünstige und robuste Anordnung einer Stapeleinheit und eine Vorgehensweise beim Stapeln von Lagenmaterial mit hoher Verarbeitungsgeschwindigkeit bereitgestellt werden, um Module oder Vorstufen von Modulen, zum Beispiel von Lagenmaterial enthaltenden Brennstoff- oder Batterie-Zellen, mit hoher Präzision zu fertigen.

### Vorgeschlagene Lösung

Zur Lösung dieses Problems werden eine Vorrichtung und ein Verfahren gemäß den unabhängigen Ansprüchen vorgeschlagen.

Eine Vorrichtung dient zur Herstellung von Modulen oder Vorstufen von Modulen, insbesondere von Lagenmaterial enthaltenden Brennstoff- oder Batterie-Zellen. In dieser Vorrichtung ist ein erster Förderer dazu vorgesehen und eingerichtet, einzelne Anoden-Lagen zu einer ersten Übergabestelle zum Übergeben an einen ersten Lagen-Wender heran zu fördern. Ein zweiter Förderer ist dazu vorgesehen und eingerichtet, einzelne Kathoden-Lagen zu einer zweiten Übergabestelle zum Übergeben an einen zweiten Lagen-Wender heran zu fördern. Der erste und der zweite Lagen-Wender haben jeweils wenigstens einen Aufnehmer. Jeder Lagen-Wender hat einen ersten Antrieb. Der erste und der zweite Lagen-Wender sind dazu vorgesehen und eingerichtet, eine jeweilige einzelne Anoden- bzw. Kathoden-Lage mittels ihrer Aufnehmer an der jeweiligen ersten oder zweiten Übergabestelle von dem ersten bzw. zweiten Förderer flächig aufzunehmen, und mittels des ersten Antriebs um einen jeweiligen Rotationswinkel zu einer jeweiligen ersten bzw. zweiten Abgabestelle zu drehen. Ein Stapeltisch mit einem Antrieb ist dazu vorgesehen und dazu eingerichtet, zwischen der ersten und der zweiten Abgabestelle hin- und her zu fahren. Der erste und der zweite Lagen-Wender sind dazu vorgesehen und eingerichtet, an der ersten bzw. der zweiten Abgabestelle jeweils eine einzelne Anoden- bzw. Kathoden-Lage von ihrem Aufnehmer an den Stapeltisch abzugeben, wenn sich der Aufnehmer - und der Stapeltisch - an der ersten bzw. der zweiten Abgabestelle befindet. Der erste und der zweite Lagen-Wender haben jeweils einen zweiten Antrieb für jeden der Aufnehmer. Diese sind dazu vorgesehen und eingerichtet, den jeweiligen Aufnehmer radial zurückzuziehen, wenn er sich dem Aufnehmer des anderen Lagen-Wenders im Raum zwischen den beiden Lagen-Wendern nähert. Damit ist die Vorrichtung in der Lage, sehr schnell aus den abwechselnd aufgestapelten einzelnen Anoden- bzw. Kathoden-Lagen auf der Ablage des Stapeltischs einen Elektroden-Stapel aufzuschichten. In einer Variante sind die ersten und zweiten Antriebe unabhängig voneinander und rotieren den ersten und den zweiten Lagen-Wender bzw. verfahren die Aufnehmer entsprechend einem vorgegebenen radialen Profil entlang eines Rotationswinkels der Lagen-Wender.

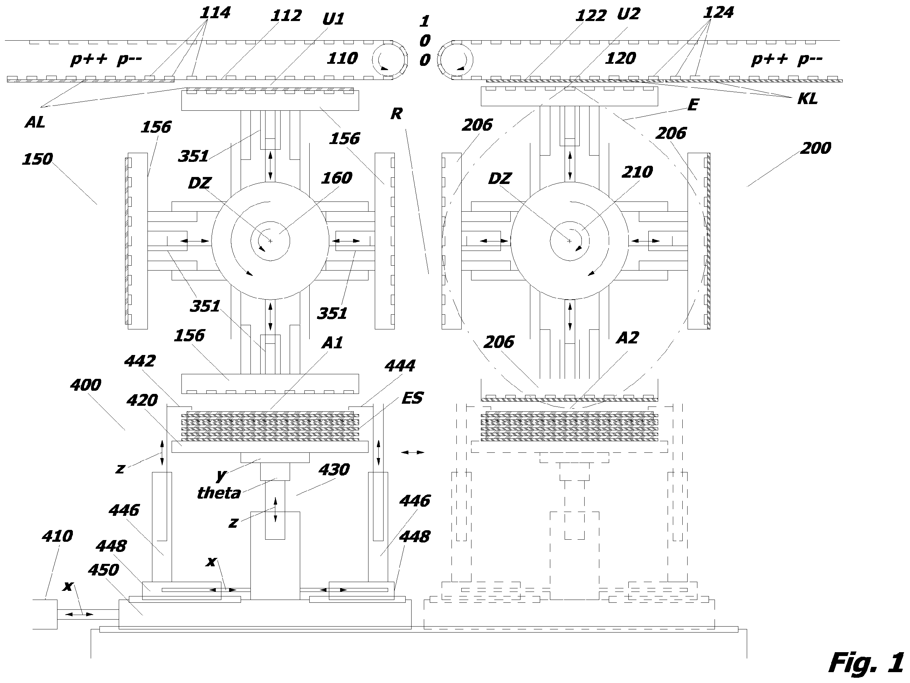

Die Hin-und-Her-Bewegung des Stapeltischs zwischen der ersten und der zweiten Abgabestelle begrenzt die Anzahl der abzulegenden Anoden- bzw. Kathoden-Lagen pro Zeiteinheit. Die hier vorgestellte Lösung, den / die jeweiligen Aufnehmer des einen Lagen-Wenders beim Annähern an den / die Aufnehmer des anderen Lagen-Wenders insbesondere im Raum zwischen den beiden Lagen-Wendern radial zurückzuziehen, erlaubt einen geringeren Abstand zwischen der ersten und der zweiten Abgabestelle als bei einer kreisförmigen Flugbahn der Aufnehmer beider Lagen-Wender, die sich nicht berühren dürfen. Damit kann die Länge des Verfahrwegs des Stapeltischs zwischen den beiden Abgabestellen verringert werden. Dies ist insbesondere auch relevant, nachdem die Aufnehmer(n) die Anoden- bzw. Kathoden-Lagen auf der Ablage des Stapeltisches abgelegt haben (6 Uhr Position in der Fig. 1), und die leeren Aufnehmer in den Raum zwischen den beiden Lagen-Wendern eintreten. Ohne dieses radiale Zurückziehen der Aufnehmer wären deren Flugbahnen deutlich größer, was einen vergrößerten Abstand der ersten und der zweiten Abgabestelle zur Folge haben müsste. Außerdem wird so eine kompaktere Bauform der gesamten Vorrichtung möglich. Insgesamt bewegen sich in einer Variante die Aufnehmer der beiden Lagen-Wender jeweils auf einer angenäherten, stehenden Ellipse, deren (senkrechte) Hauptachsen vom Zentrum der jeweiligen Übergabestelle zum Zentrum der jeweiligen Abgabestelle reicht, und deren (waagrechte) Nebenachsen einander nicht berühren. Das Führen der Aufnehmer entlang dieser angenähert elliptischen Bahnen vermeidet eine Kollision der Aufnehmer beim Drehen von der Abgabestelle zurück zur Übergabestelle, obwohl die beiden Lagen-Wender dicht bei einander angeordnet sind, um den Weg des Stapeltisches von einem Lagen-Wender zum anderen Lagen-Wender so kurz wie möglich zu halten.

Bei einer Variante der Vorrichtung sind der erste und der zweite Lagen-Wender dazu vorgesehen und eingerichtet, mittels ihres jeweiligen zweiten Antriebs die Aufnehmer herauszufahren, wenn die Aufnehmer sich der jeweiligen ersten bzw. zweiten Übergabestelle und/ oder der ersten bzw. der zweiten Abgabestelle nähern. Zum Aufnehmen der Anoden- bzw. Kathoden-Lagen an den jeweiligen Übergabestellen (12 Uhr Position bzw. 6 Uhr in der Fig. 1) können die Aufnehmer der beiden Lagen-Wender radial ausgefahren werden. Die radiale Bewegung der Aufnehmer beginnt, ehe die Aufnehmer die 6 bzw. 12 Uhr Position erreichen, und nicht erst in der erreichten Position.

Dies erhöht die Ortsgenauigkeit der Aufnahme der Anoden- bzw. Kathoden-Lagen von den beiden Förderern an den jeweiligen Übergabestellen. Damit ist eine höhere Anzahl an Anoden- bzw. Kathoden-Lagen pro Zeiteinheit auf der Ablage des Stapeltischs möglich, ohne die Genauigkeit des Aufbaus des Elektroden-Stapels zu beeinträchtigen. Mit dieser Vorrichtung ist ein Ablegen einer Lage in etwa 130 ms und weniger zu erreichen.

In einer Variante der Vorrichtung ist in dem Raum zwischen den beiden Lagen-Wendern ein Endlos-Separator von oben zugeführt, der auf dem Stapeltisch z-förmig gefaltet wird. Der Stapeltisch fährt permanent horizontal zwischen den beiden Ablagepositionen hin und her, so dass für einen Elektroden-Stapel, beginnend mit dem Separator und danach abwechselnd die Anoden- bzw. Kathoden-Lagen, immer durch den gefalteten Separator getrennt, abwechselnd durch die beiden Lagen-Wender auf dem Stapeltisch abgelegt werden.

Bei einer Variante der Vorrichtung sind der erste Förderer und der zweite Förderer benachbart und im Abstand zueinander angeordnet sind. Bei einer Variante der Vorrichtung sind der erste Förderer und/oder der zweite Förderer als Bandförderer ausgestaltet, die mit ihrer jeweiligen Unterseite dem ersten bzw. zweiten Lagen-Wender zugewandt sind, um die einzelnen Anoden-Lagen bzw. die einzelnen Kathoden-Lagen an ihrer Unterseite zu der ersten bzw. der zweiten Übergabestelle fördern.

Bei einer Variante der Vorrichtung haben der erste Förderer und/oder der zweite Förderer jeweils ein gesteuertes Unter-/Über-Druck-Förderband. Sie sind dazu vorgesehen und eingerichtet, mittels gesteuertem pneumatischem Unterdruck die einzelnen Anoden-Lagen bzw. die einzelnen Kathoden-Lagen aufzunehmen und während des Förderns zu der ersten bzw. der zweiten Übergabestelle zu halten. Bei einer Variante der Vorrichtung sind mittels einem gesteuertem pneumatischem Überdruck, zum Beispiel in Form eines kurzen Blas-Stoßes, die einzelnen Anoden-Lagen bzw. die einzelnen Kathoden-Lagen in der ersten bzw. der zweiten Übergabestelle an den ersten bzw. zweiten Lagen-Wender abzugeben.

Bei einer Variante der Vorrichtung haben der erste und/oder der zweite Lagen-Wender jeweils mehrere Aufnehmer zum Aufnehmen der einzelnen Anoden- oder Kathoden-Lagen. Die Aufnehmer sind dazu vorgesehen und dazu eingerichtet, nacheinander an der jeweiligen Übergabestelle und der jeweiligen Abgabestelle kontinuierlich oder getaktet vorbei zu rotieren. Dabei können die Aufnehmer des ersten und/oder zweiten Lagen-Wenders die jeweilige einzelne Anoden- oder Kathoden-Lage aufnehmen bzw. abgeben.

Der Rotationswinkel des ersten und/oder des zweiten Lagen-Wenders ist zum Beispiel etwa 180°. Durch das Aufnehmen einer Lage mittels des Lagen-Wenders von dem Förderer, das Wenden und das anschließende Ablegen auf dem Stapeltisch wird die Lage gewendet. Das heißt, die von dem Förderer abliegende freie Oberseite der Lage vor dem Aufnehmen durch die Aufnehmer ist dieselbe freie Oberseite der Lage nach dem Ablegen auf dem Stapeltisch, allerdings mit um den Rotationswinkel (zum Beispiel 180°) gewendeter Orientierung. Das Rotieren des ersten bzw. zweiten Lagen-Wenders erfolgt um deren jeweilige Drehzentren.

Bei einer Variante der Vorrichtung haben der erste und der zweite Lagen-Wender im Wesentlichen einen übereinstimmenden Aufbau, übereinstimmende Funktion und/oder übereinstimmende Abmessungen. Bei einer Variante der Vorrichtung sind der erste und der zweite Lagen-Wender dazu vorgesehen und eingerichtet, mittels ihres jeweiligen ersten Antriebs im bzw. gegen den Uhrzeigersinn so zu drehen, dass die einzelnen Anoden- bzw. Kathoden-Lagen von ihrer Übergabestelle zu ihrer Abgabestelle unter Vermeidung eines Raums zwischen dem ersten und dem zweiten Lagen-Wender gelangen. Mit anderen Worten werden die einzelnen Anoden- bzw. Kathoden-Lagen von ihrer Übergabestelle zu ihrer Abgabestelle "außenherum" um den ersten bzw. zweiten Lagen-Wender gefördert, und nicht zwischen den beiden Lagenwendern hindurch.

Bei einer Variante der Vorrichtung haben die erste und die zweite Übergabestelle zwischen dem ersten Förderer bzw. dem zweiten Förderer und dem ersten bzw. dem zweite Lagen-Wender jeweils ein erstes Zentrum, sowie die erste bzw. die zweite Abgabestelle haben zwischen dem ersten bzw. dem zweitem Lagen-Wender und Stapeltisch jeweils ein zweites Zentrum. Bei einer Variante der Vorrichtung liegen diese jeweiligen ersten und zweiten Zentren auf einer Geraden, die ein jeweiliges Drehzentrum des ersten Förderers bzw. des zweiten Förderers im Wesentlichen zumindest annähernd schneiden.

Bei einer Variante der Vorrichtung hat der Stapeltisch eine Ablage für die einzelnen Anoden- und Kathoden-Lagen. Bei einer Variante der Vorrichtung hat der Stapeltisch eine ein- oder mehrachsige Stelleinrichtung, die vorgesehen und dazu eingerichtet ist, die Ablage längs der oder um die jeweilige(n) Achse(n) zu bewegen, um sie zur ersten bzw. zur zweiten Abgabestelle auszurichten. Dies erlaubt ein präzises Abstapeln der Lagen auf der Ablage, was eine sichere Produktion ohne große Verluste an fehlproduzierten Elektrodenstapeln ermöglicht.

Bei einer Variante der Vorrichtung hat der Stapeltisch wenigstens einen ersten und wenigstens einen zweiten Klemmfinger, die vorgesehen und dazu eingerichtet sind, mit der jeweils obersten der Anoden- und Kathoden-Lagen abwechselnd oder gleichzeitig in oder außer Eingriff zu kommen und/oder die jeweils oberste der Anoden- und Kathoden-Lagen gegen den Elektroden-Stapel auf der Ablage zu drängen. Die Ablage ist in einer Variante mit den Klemmfingern um eine z-Achse (Hochachse) rotierbar. Die Ablage ist in einer Variante mit den Klemmfingern in x- und/oder y-Richtung positionierbar.

Bei einer Variante der Vorrichtung sind der erste und der zweite Lagen-Wender dazu vorgesehen und dazu eingerichtet, die einzelnen Anoden-Lagen und die einzelnen Kathoden-Lagen mittels eines gesteuerten pneumatischen Unterdrucks aufzunehmen und während des Wendens zu der ersten bzw. der zweiten Abgabestelle zu halten. Zusätzlich oder stattdessen sind mittels eines gesteuerten pneumatischen Überdrucks die einzelnen Anoden-Lagen und die einzelnen Kathoden-Lagen in der ersten bzw. der zweiten Abgabestelle abzugeben, um die Lagen auf der Ablage zu stapeln.

Bei einer Variante der Vorrichtung haben der erste und der zweite Lagen-Wender jeweils eine drehbare Über-/Unter-Druck-Verteilung, die dazu vorgesehen und dazu eingerichtet ist, die Aufnehmer mit dem gesteuerten pneumatischem Unterdruck und/oder Überdruck zu speisen. Bei einer Variante der Vorrichtung sind der erste und der zweite Lagen-Wender vorgesehen und dazu eingerichtet, jeweils nur einzelne der Anoden-Lagen bzw. nur einzelne der Kathoden-Lagen zu der ersten bzw. der zweiten Abgabestelle hin zu wenden.

Bei einer Variante der Vorrichtung ist jede Stelleinrichtung vorgesehen und dazu eingerichtet, die Ablage beim Stapeln der einzelnen Anoden-Lagen und einzelnen Kathoden-Lagen um eine Wegstrecke abzusenken, die einer Dicke einer einzelnen Anoden-Lage oder einer einzelnen Kathoden-Lage im Wesentlichen entspricht.

Bei einer Variante der Vorrichtung ist der erste Antrieb als Drehantrieb ausgestaltet, der dazu vorgesehen und dazu eingerichtet ist, den Aufnehmer des jeweiligen Lagen-Wenders zu wenden. Bei einer Variante der Vorrichtung hat der zweite Antrieb einen Drehantrieb mit einer mit den Aufnehmern getrieblich gekoppelten Exzenterwelle, um den Aufnehmer des jeweiligen Lagen-Wenders radial zurückzuziehen und/oder auszufahren. Alternativ dazu hat der zweite Antrieb einen Linearantrieb, der mit einem der Aufnehmer getrieblich gekoppelt ist, um die Aufnehmer des jeweiligen Lagen-Wenders radial zurückzuziehen und/oder auszufahren.

Ein Verfahren zur Herstellung von Modulen oder Vorstufen von Modulen, insbesondere von Lagenmaterial enthaltenden Brennstoff- oder Batterie-Zellen, ausgeführt zum Beispiel mit der oben erläuterten Vorrichtung, umfasst, zum Beispiel in folgender Reihenfolge, die Schritte: Fördern einzelner Anoden-Lagen zu einer ersten Übergabestelle zum Übergeben an einen ersten Lagen-Wender; Fördern einzelner Kathoden-Lagen zu einer zweiten Übergabestelle zum Übergeben an einen zweiten Lagen-Wender; Aufnehmen jeweiliger einzelner Anoden- bzw. Kathoden-Lagen an der jeweiligen ersten oder zweiten Übergabestelle mittels entsprechender Aufnehmer(n) eines jeweiligen ersten bzw. zweiten Lagen-Wenders; Wenden der aufgenommenen einzelnen Anoden- bzw. Kathoden-Lagen um einen jeweiligen Rotationswinkel zu einer jeweiligen ersten bzw. zweiten Abgabestelle; Hin-und-Her-Fahren eines Stapeltisches mit einem Antrieb zwischen der ersten und der zweiten Abgabestelle; Abgeben der jeweiligen einzelnen Anoden- bzw. Kathoden-Lage an der ersten bzw. der zweiten Abgabestelle an den Stapeltisch, wenn sich dieser an der ersten bzw. der zweiten Abgabestelle befindet; und radiales Zurückziehen des Aufnehmers des ersten und/ oder des zweiten Lagen-Wenders, wenn sie sich dem Aufnehmer des anderen Lagen-Wenders im Raum zwischen den beiden Lagen-Wendern nähert.

Dieses Nähern des Aufnehmers des einen Lagen-Wenders an den Aufnehmer des anderen Lagen-Wenders ist insbesondere in dem Raum zwischen den beiden Lagen-Wendern relevant, wenn sich der Aufnehmer auf dem Weg von seiner Abgabestelle zu seiner Übergabestelle oder von seiner Übergabestelle zu seiner Abgabestelle einem Aufnehmer des anderen Lagen-Wenders nähert.

Vorstehend sind Verfahrensaspekte in Vorrichtungsbegriffen und *vice versa* dargestellt. Dabei dienen sowohl die Verfahrensaspekte als auch die Vorrichtungsbegriffe zur Erläuterung der Vorrichtung und ihres Betriebes.

### Kurzbeschreibung der Figuren

Weitere Merkmale, Eigenschaften und Vorteile der Vorrichtungen und der Verfahrensweisen sind der nachfolgenden Beschreibung in Verbindung mit der Zeichnung zu entnehmen. Mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen und erläutern deren Betrieb. In den Fig. gleiche oder analoge Teile sind im Einzelfall nicht individuell mit Bezugszeichen versehen.

### Hierbei zeigen:

Fig. 1 eine Vorrichtung zur Herstellung von Modulen oder Vorstufen von Modulen in einer schematischen Vorderansicht;

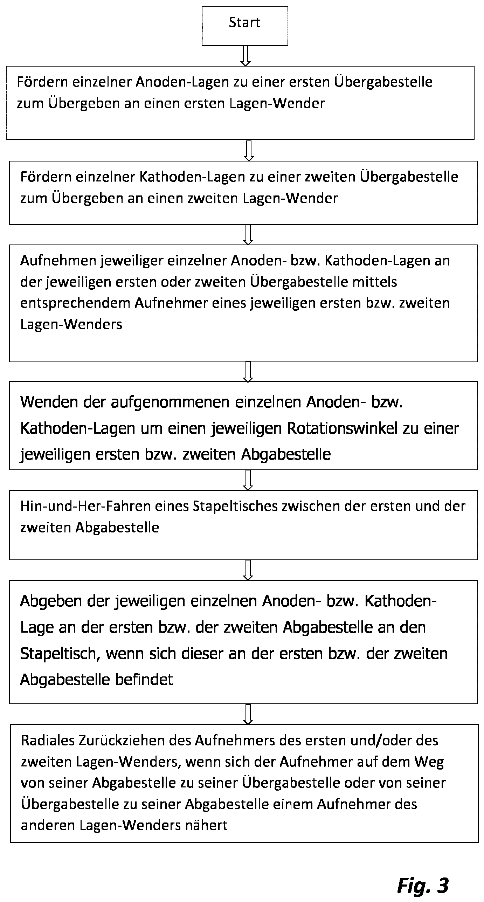

Fig. 2 einen der beiden Lagenwender einer Vorrichtung zur Herstellung von Modulen oder Vorstufen von Modulen in einer weiteren Variante in einer schematischen Seitenansicht; und Fig. 3 ein Ablaufdiagramm eines Verfahrens, das auch durch die Vorrichtung ausführbar ist.

### Detaillierte Beschreibung von Varianten der Vorrichtungen und der Verfahrensweisen

Fig. 1 veranschaulicht schematisch eine Vorrichtung 100 zur Herstellung von Modulen oder Vorstufen von Modulen. Hier wird die Vorrichtung 100 exemplarisch anhand der Herstellung von Brennstoff- oder Batterie-Zellen erläutert, die Lagenmaterial und / oder Fluid enthalten.

Bei der Vorrichtung 100 dient ein erster Förderer 110 dazu, einzelne Anoden-Lagen AL zu einer ersten Übergabestelle U1 zum Übergeben an einen ersten Lagen-Wender 150 heran zu fördern. Ein zweiter Förderer 120 dient dazu, einzelne Kathoden-Lagen KL zu einer zweiten Übergabestelle U2 zum Übergeben an einen zweiten Lagen-Wender 200 heran zu fördern.

Wie in Fig. 1 veranschaulicht, sind der erste Förderer 110 und der zweite Förderer 120 im oberen Bereich der Vorrichtung 100 auf gleichem Niveau, benachbart und im Abstand zueinander angeordnet. Dabei sind der erste Förderer 110 und der zweite Förderer 120 hier als Bandförderer ausgestaltet, die mit ihrer jeweiligen Unterseite 112, 122 dem ersten bzw. zweiten Lagen-Wender 150, 200 zugewandt sind. So können der erste Förderer 110 und der zweite Förderer 120 die einzelnen Anoden-Lagen AL bzw. die einzelnen Kathoden-Lagen KL an ihrer Unterseite 112, 122 zu der ersten bzw. der zweiten Übergabestelle U1, U2 fördern. Insbesondere haben hier der erste Förderer 110 und der zweite Förderer 120 jeweils ein gesteuertes Unter-/Über-Druck-Förderband mit Saug-/Blas-Öffnungen 114, 124, um mittels gesteuert zugeführtem pneumatischem Unterdruck p-- die einzelnen Anoden-Lagen AL bzw. die einzelnen Kathoden-Lagen KL aufzunehmen und während des Förderns zu der ersten bzw. der zweiten Übergabestelle U1, U2 zu halten. Mittels einem gesteuert zugeführten pneumatischem Überdruck p++ an den Saug-/Blas-Öffnungen 114, 124 können die einzelnen Anoden-Lagen AL bzw. die einzelnen Kathoden-Lagen KL kontrolliert und schnell an der ersten bzw. der zweiten Übergabestelle U1, U2 an den ersten bzw. zweiten Lagen-Wender 150, 200 abgegeben werden. Der erste Förderer 110 kann die einzelnen Anoden-Lagen AL von einem Stapel oder einem dritten Förderer (nicht gezeigt), insbesondere einem Unterdruck-Förderband, übernehmen. Der zweite Förderer 120 kann die einzelnen Kathoden-Lagen KL von einem Stapel oder einem vierten Förderer (nicht gezeigt), insbesondere einem Unterdruck-Förderband, übernehmen.

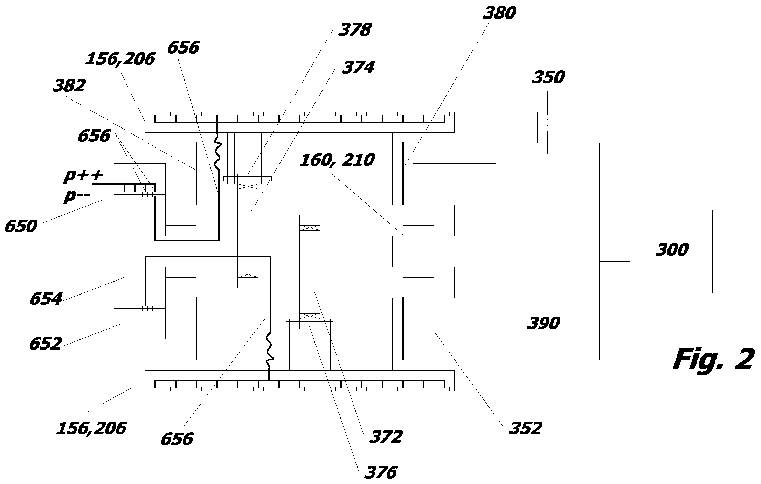

Der erste und der zweite Lagen-Wender 150, 200 haben jeweils vier etwa rechteckige ebene Aufnehmer 156, 206 und einen ersten Antrieb 300 (siehe Fig. 2). Mit den Aufnehmern 156, 206 werden eine jeweilige einzelne Anoden- bzw. Kathoden-Lage AL, KL an der jeweiligen ersten oder zweiten Übergabestelle U1, U2 von dem ersten bzw. zweiten Förderer 110, 120 flächig aufgenommen. Diese Aufnehmer 156, 206 sind mittelbar an einer drehbar gelagerten Welle 160, 210 radial verschiebbar gelagert. Diese Welle 160, 210 dreht die jeweiligen Aufnehmer 156, 206 mittels des ersten Antriebs 300 um einen jeweiligen Rotationswinkel RW - hier 180° - zu einer jeweiligen ersten bzw. zweiten Abgabestelle A1, A2. Der erste Antrieb 300 rotiert die Lagen-Wender 150, 200 insgesamt. Damit sind der erste und der zweite Lagen-Wender 150, 200 mit ihren jeweiligen mehreren Aufnehmer zum Aufnehmen der einzelnen Anoden- oder Kathoden-Lagen AL, KL eingerichtet, wenn die Aufnehmer nacheinander an der jeweiligen Übergabestelle U1, U2 und der jeweiligen Abgabestelle A1, A2 kontinuierlich oder getaktet vorbei rotieren, und dabei die jeweilige einzelne Anoden- oder Kathoden-Lage AL, KL aufnehmen bzw. abgeben. Der erste und der zweite Lagen-Wender 150, 200 drehen sich mittels ihres jeweiligen ersten Antriebs 300 im bzw. gegen den Uhrzeigersinn so, dass die einzelnen Anoden- bzw. Kathoden-Lagen AL, KL von ihrer Übergabestelle U1, U2 zu ihrer Abgabestelle A1, A2 unter Vermeidung des Raums R zwischen dem ersten und dem zweiten Lagen-Wender 150, 200 gelangen.

Ersichtlich haben der erste und der zweite Lagen-Wender 150, 200 im Wesentlichen einen übereinstimmenden Aufbau, übereinstimmende Funktion und/oder übereinstimmende Abmessungen.

Ein nicht näher veranschaulichtes Endlos-Separatorband wird von oben zwischen den beiden Förderern 110, 120 in und durch den Raum R geführt und tritt und am unteren Ende des Raums R aus einem Spalt zwischen zwei drehbar gelagerten Walzen aus. Das Separatorband wird z-förmig auf dem Stapeltisch gefaltet und die Anoden- und Kathoden-Lagen sind durch den Separator voneinander getrennt.

Der erste und der zweite Lagen-Wender 150, 200 haben (siehe Fig. 1) für die Aufnehmer 156, 206 als zweiten Antrieb 350 eine Anordnung aus an Drehkränzen angeordneten Linearantrieben 351, von denen jeweils ein Linearantrieb 351 mit einem der Aufnehmer 156, 206 getrieblich gekoppelt ist, um die Aufnehmer des jeweiligen Lagen-Wenders 150, 200 radial zurückzuziehen und/oder auszufahren.

Der erste und der zweite Lagen-Wender 150, 200 haben in einer weiteren Variante jeweils einen zweiten Antrieb 350 (siehe Fig. 2) für die Aufnehmer 156, 206. Dieser zweite Antrieb 350 dient dazu, den jeweiligen Aufnehmer 156, 206 radial zurückzuziehen, wenn sie sich - nach dem Ablegen der jeweiligen Lage auf dem Stapeltisch 400 - der Aufnehmer des anderen Lagen-Wenders auf dem Weg zu ihrer Übernahmestelle U1, U2 in dem Raum zwischen den beiden Lagen-Wendern nähert. Der zweite Antrieb 350 rotiert das Rohr, den damit verbundenen Drehkranz und die Aufnehmer 156, 206 um das Drehzentrum DZ. Bedingt durch die Kopplung an einen nachstehend erläuterten Exzenter werden die Aufnehmer 156, 206 radial bewegt. Der erste Antrieb 300 ist ein gesteuerter Servo-Motor, der den Lagen-Wender als Ganzes dreht, um den Aufnehmer um ein Drehzentrum des Lagen-Wenders zu wenden. Der zweite Antrieb 350 ist in der in Fig. 2 veranschaulichten Variante ein vom ersten Drehantrieb 300 unabhängig zu steuernder Servo-Motor, der getrieblich mit der als Exzenterwelle ausgestalteten inneren Welle 160, 210 gekoppelt ist. Diese Exzenterwelle ist mit Exzentern 372, 374 für jeden der Aufnehmer versehen, um die Aufnehmer 156, 206 des jeweiligen Lagen-Wenders 150, 200 radial zurückzuziehen und auszufahren. Dazu ist jeder Exzenter 372, 374 mit einem Nadellager eingefasst, das außen einen Ring 376, 378 trägt, der an dem jeweiligen Aufnehmer 156, 206 angelenkt ist. Der jeweilige Exzenter 372, 374 bewirkt bei einer Drehung der Welle 160, 210, dass sich die jeweils in radial orientierten Linearführungen 380, 382 geführten Aufnehmer 156, 206 nach außen oder innen bewegen. Insbesondere erfolgt ein radiales Zurückziehen der Aufnehmer des ersten und/oder des zweiten Lagen-Wenders, wenn sich der Aufnehmer auf dem Weg von seiner Abgabestelle zu seiner Übergabestelle oder von seiner Übergabestelle zu seiner Abgabestelle einem Aufnehmer des anderen Lagen-Wenders nähert.

Der zweite Antrieb 350 rotiert die jeweilige innere Welle 160, 210 und bewirkt das radiale Aus- und Einfahren der Aufnehmer. Insbesondere dient der zweite Antrieb 350 auch dazu, dass der erste und der zweite Lagen-Wender die jeweiligen Aufnehmer radial herausfahren, wenn die Aufnehmer sich der jeweiligen ersten bzw. zweiten Übergabestelle U1, U2 und der ersten bzw. der zweiten Abgabestelle A1, A2 nähern. Insgesamt bewegen sich in dieser Variante die Aufnehmer der beiden Lagen-Wender jeweils etwa auf einer angenäherten, stehenden Ellipse, deren Hauptachsen vom Zentrum der jeweiligen Übergabestelle zum Zentrum der jeweiligen Abgabestelle reicht, und deren Nebenachsen einander nicht berühren. In der Fig. 1 ist diese Ellipse E strichpunktiert an dem zweiten Lagenwender 200 veranschaulicht. Erkennbar muss diese Bewegung nicht symmetrisch sein, da der vom Raum R abliegende Aufnehmer radial weiter herausgefahren ist als der sich im Raum R befindliche Aufnehmer. Der erste Antrieb 300 und der zweite Antrieb 350 sind über ein kombiniertes Winkel- und Axialgetriebe 390 zusammengeführt und versetzen unabhängig voneinander die innere Welle 160, 210 bzw. alle Aufnehmer eines Lagen-Wenders als Ganzes über ein Verbindungselement, z.B. ein Rohr 352, in Rotation. Wie in Fig. 2 veranschaulicht, haben das Rohr 352 und die an den ersten Antrieb 300 gekoppelte Welle kollineare Rotationsachsen.

Ein Stapeltisch 400 zum Aufnehmen der einzelnen Anoden- bzw. Kathoden-Lagen AL, KL an der jeweiligen ersten bzw. zweiten Abgabestelle A1, A2 ist mit einem Antrieb 410 versehen. Dieser Antrieb 410 fährt den Stapeltisch 400 gesteuert entlang der x-Achse zwischen der ersten und der zweiten Abgabestelle A1, A2 hin- und her, so dass der Stapeltisch 400 positionsgenau zu der auf ihm abzulegenden einzelnen Anoden- bzw. Kathoden-Lage AL, KL ausgerichtet ist. In der Fig. 1 ist der Stapeltisch in seiner linken ausgerichteten Position unter dem Lagenwender 150 in durchgezogenen Linien dargestellt, und in seiner rechten ausgerichtete Position unter dem Lagenwender 200 in kurz gestrichelten Linien dargestellt.

Der erste und der zweite Lagen-Wender 150, 200 geben an der ersten bzw. der zweiten Abgabestelle A1, A2 jeweils eine einzelne Anoden- bzw. Kathoden-Lage AL, KL von ihrer Aufnehmer 156, 206 - in der 6 Uhr Position in Fig. 1 - an den Stapeltisch 400 ab, wenn sich die Aufnehmer 156, 206 an der ersten bzw. der zweiten Abgabestelle A1, A2 befindet.

Dazu haben in der hier veranschaulichten Variante der Vorrichtung 100 die erste und die zweite Übergabestelle U1, U2 jeweils ein erstes Zentrum (etwa oberhalb der Mitte der in der 12 Uhr Position befindlichen Aufnehmer zwischen dem Aufnehmer und dem Förderer), sowie die erste bzw. die zweite Abgabestelle A1, A2 jeweils ein zweites Zentrum (etwa unterhalb der Mitte der in der 6 Uhr Position befindlichen Aufnehmer zwischen dem Aufnehmer und dem Stapeltisch). Diese jeweiligen ersten und zweiten Zentren liegen auf einer gedachten Geraden, die ein jeweiliges Drehzentrum DZ des ersten Lagen-Wenders 150 bzw. des zweiten Lagen-Wenders 200 schneiden. Der erste und der zweite Lagen-Wender wenden jeweils nur einzelne der Anoden-Lagen AL bzw. nur einzelne der Kathoden-Lagen KL zu der ersten bzw. der zweiten Abgabestelle A1, A2 hin.

In der Anordnung mit dem Exzenterantrieb können der erste Antrieb eines Lagen-Wenders und der zweite Antrieb desselben Lagen-Wenders durchgehend gleichsinnig oder auch zeitweilig gegenläufig rotieren. Dadurch kann sich die Drehbewegung des Lagen-Wenders als Ganzes mit der Radial-Ein-/Auswärts-Bewegung seiner Aufnehmer derart überlagern, dass ein besonders geringer Abstand zwischen den beiden Lagen-Wendern, und damit ein besonders kurzer Weg zwischen den beiden Abgabestellen, möglich ist. Überdies können die beiden Lagen-Wender (in beiden Varianten der Fig. 1 und 2) durch ihre jeweiligen ersten Antriebe derart in Umdrehung versetzt sein, dass der/die Aufnehmer des einen Lagen-Wenders genau gegenphasig zu dem/den Aufnehmer/n des anderen Lagen-Wenders rotieren. Dies bedeutet, dass im Fall eines Aufnehmers pro Lagen-Wender der eine Aufnehmer des einen Lagen-Wenders sich nahe der Übergabestelle befindet, während der eine Aufnehmer des anderen Lagen-Wenders sich nahe der Abgabestelle befindet. Im Fall von vier Aufnehmern pro Lagen-Wender eilt ein Aufnehmer des einen Lagen-Wenders einem Aufnehmer des anderen Lagen-Wenders um etwa 45° vor.

Der Stapeltisch 400 hat eine Ablage 420 für die einzelnen Anoden- und Kathoden-Lagen AL, KL sowie eine Stelleinrichtung 430 mit einem entsprechenden Drehantrieb um die z-Achse, die die Ablage 420 längs der Achsen und um die z-Achse bewegen. So ist der Stapeltisch 400 und seine Ablage 420, genauer gesagt ihr Zentrum, zur ersten bzw. zur zweiten Abgabestelle A1, A2 sowie den Aufnehmer in der 6 Uhr Position zielgenau auszurichten.

Der Stapeltisch 400 hat einen ersten und einen zweiten Klemmfinger 442, 444. In einer Variante sind zwei Klemmfinger an jeder zweier einander gegenüberliegenden Seiten vorgesehen. Dabei bewegen sich die Klemmfinger in y-Richtung senkrecht zur Rotationsebene der Aufnehmer. Diese zwei Klemmfinger 442, 444 greifen von beiden (Quer- oder Längs-)Seiten entlang der x- oder y-Richtung seitlich über den sich aus den aus Anoden- und Kathoden-Lagen AL, KL bildenden Elektroden-Stapel und kommen gesteuert mit der jeweils obersten der Anoden- und Kathoden-Lagen AL, KL in oder außer Eingriff, um die jeweils oberste der Anoden- und Kathoden-Lagen AL, KL gegen den Elektroden-Stapel ES auf der Ablage 420 drängen. Dazu sind entsprechende Linearantriebe 446, 448 in z-Richtung und in x-Richtung oder y-Richtung je nach Anordnung der Klemmfinger 442, 444 vorgesehen, die die ersten und zweiten Klemmfinger 442, 444 relativ zur Grundplatte 450 des Stapeltisch 400 und zu dessen Ablage 420 gesteuert bewegen. Der Stapeltisch 400 ist in einer Variante auf einer starren Platte abgestützt, die eine Ausnehmung hat. Die Grundplatte 450 ist nur in x-Richtung entlang zweier Linearführungen relativ zu der starren Platte verfahrbar. Auf der Grundplatte 450 befindet sich eine Y-Platte, die in y-Richtung relativ zu der Grundplatte 450 verfahrbar ist. Die Y-Platte trägt eine Aktor-Platte. Auf der Aktor-Platte befindet sich die Ablage 420. Die Aktor-Platte ist zusammen mit der Ablage 420 um die z-Achse rotierbar und somit auch die Klemmfinger und deren Aktoren.

Auf der Aktor-Platte befindet sich für jeden Klemmfinger ein x- oder y-Aktor, je nach Bewegungsrichtung und Anordnung der Klemmfinger, um einen einzelnen Klemmfinger in y-Richtung positionieren zu können. Der z-Aktor eines jeden Klemmfingers ist auf einer separaten Platte angeordnet, die auf der Y-Platte und neben der Ablage 420 angeordnet ist. Der y-Aktor verschiebt so die separate Platte und somit den jeweiligen Klemmfinger 442, 444 samt seinem z-Aktor.

Bei Verschiebung der Y-Platte in y-Richtung wird die Aktor-Platte zusammen mit den Klemmfingern in der y-Richtung mitverschoben. Die Ablage 420 ist in z-Richtung durch einen z-Antrieb positionierbar, der genau unterhalb der Ablage angeordnet sein kann und in der mittigen Ausnehmung der starren Platte Bewegungsspielraum in X-Richtung hat.

Der erste und der zweite Lagen-Wender 150, 200 sind dazu eingerichtet, die einzelnen Anoden-Lagen AL und die einzelnen Kathoden-Lagen KL mittels gesteuertem pneumatischem Unterdruck p-- aufzunehmen und während des Wendens zu der ersten bzw. der zweiten Abgabestelle A1, A2 zu halten. Außerdem sind in der hier gezeigten Variante der Vorrichtung 100 der erste und der zweite Lagen-Wender 150, 200 dazu eingerichtet, mittels gesteuertem pneumatischem Überdruck p++ die einzelnen Anoden-Lagen AL und die einzelnen Kathoden-Lagen KL in der ersten bzw. der zweiten Abgabestelle durch einen kurzen Blas-Stoß abzugeben, um die Lagen AL, KL auf der Ablage 420 zur Bildung des Elektroden-Stapels ES zu stapeln.

Dazu ist in der Fig. 2 veranschaulicht, dass der erste und der zweite Lagen-Wender 150, 200 jeweils eine drehbare Über-/Unter-Druck-Verteilung 650 aufweisen, die um die innere Welle 160, 210 herum angeordnet ist, um die Aufnehmer mit dem gesteuerten pneumatischen Unterdruck p-- und/oder Überdruck p++ zu speisen. Dabei sind zwei konzentrische Ringe 652, 654 drehbar, einander fluiddicht umgebend, vorgesehen, in denen für jeden der Aufnehmer eine Über-/Unter-Druckübergabe 656 realisiert ist. Von der Über-/Unter-Druckübergabe 656 reicht für jeden Aufnehmer 156, 206 eine Fluidleitung in die innere Welle 160, 210 und von dort zu einem Anschluss für eine radial flexible Leitung 656 zum jeweiligen Aufnehmer 156, 206. Die flexible Leitung 656 ist mit einer Vielzahl an Öffnungen in der vom Drehzentrum abgewandten Oberfläche der Aufnehmer verbunden.

Alternativ ist jeder dieser Öffnungen eine elastische Düse zugeordnet, welche die Oberfläche des Aufnehmers geringfügig (zum Beispiel kleiner 3 mm) überragen und mit der flexiblen Leitung 656 verbunden sind. Damit lassen sich die Anoden-Lagen AL und Kathoden-Lagen KL sicher und schonend aufnehmen und mit hoher Präzision in ihrer Ausrichtung auf der Ablage 420 wieder abgeben. Die Stelleinrichtung 430 senkt gesteuert die Ablage 420 beim Stapeln nach jedem Ablegen der einzelnen Anoden-Lagen AL und der einzelnen Kathoden-Lagen KL um eine Wegstrecke ab, die einer Dicke einer einzelnen Anoden-Lage AL bzw. einer einzelnen Kathoden-Lage KL entspricht. Damit ist ein sehr kurzer, definierter freier Weg zwischen dem Abgeben von dem Aufnehmer 156, 206 und dem Auftreffen auf dem Elektroden-Stapel ES sicherzustellen.

Die vorangehend beschriebenen Varianten der Stapeleinheit, deren Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Eine Vorrichtung (100) zur Herstellung von Modulen oder Vorstufen von Modulen, insbesondere von Lagenmaterial enthaltenden Brennstoff- oder Batterie-Zellen, wobei
- ein erster Förderer (110) dazu vorgesehen und eingerichtet ist, einzelne Anoden-Lagen (AL) zu einer ersten Übergabestelle (U1) zum Übergeben an einen ersten Lagen-Wender (150) heran zu fördern;
- ein zweiter Förderer (120) dazu vorgesehen und eingerichtet ist, einzelne Kathoden-Lagen (KL) zu einer zweiten Übergabestelle (U2) zum Übergeben an einen zweiten Lagen-Wender (200) heran zu fördern;
- der erste und der zweite Lagen-Wender (150, 200) jeweils wenigstens einen Aufnehmer (156, 206) und jeweils einen ersten Antrieb (300) aufweisen und dazu vorgesehen und eingerichtet sind, eine jeweilige einzelne Anoden- bzw. Kathoden-Lage (AL, KL) mittels der Aufnehmer (156, 206) an der jeweiligen ersten bzw. zweiten Übergabestelle (U1, U2) von dem ersten bzw. zweiten Förderer (110, 120) flächig aufzunehmen, und mittels des jeweiligen ersten Antriebs (300) um einen jeweiligen Rotationswinkel zu einer jeweiligen ersten bzw. zweiten Abgabestelle (A1, A2) zu drehen;
- ein Stapeltisch (400) mit einem Antrieb (410) dazu vorgesehen und dazu eingerichtet ist, zwischen der ersten und der zweiten Abgabestelle (A1, A2) hin- und her zu fahren;
- der erste und der zweite Lagen-Wender (150, 200) dazu vorgesehen und eingerichtet sind, an der ersten bzw. der zweiten Abgabestelle (A1, A2) jeweils eine einzelne Anoden- bzw. Kathoden-Lage (AL, KL) von ihrem Aufnehmer (156, 206) an den Stapeltisch (400) abzugeben, wenn sich der Aufnehmer (156, 206) an der ersten bzw. der zweiten Abgabestelle (A1, A2) befindet; und
- der erste und der zweite Lagen-Wender (150, 200) jeweils einen zweiten Antrieb (350) für den Aufnehmer (156, 206) aufweisen, die dazu vorgesehen und eingerichtet sind, den jeweiligen Aufnehmer (156, 206) radial zurückzuziehen, wenn er sich dem Aufnehmer (156, 206) des anderen Lagen-Wenders (150, 200) im Raum zwischen den beiden Lagen-Wendern nähert.

2. Die Vorrichtung nach Anspruch 1, wobei
- der erste und der zweite Lagen-Wender (150, 200) dazu vorgesehen und eingerichtet sind, mittels ihres jeweiligen zweiten Antriebs (350) den Aufnehmer (156, 206) herauszufahren, wenn der Aufnehmer (156, 206) sich der jeweiligen ersten bzw. zweiten Übergabestelle (U1, U2) und/oder der jeweiligen ersten bzw. der jeweiligen zweiten Abgabestelle (A1, A2) nähern.

3. Die Vorrichtung nach einem der Ansprüche 1 bis 2, wobei
- der erste Förderer (110) und der zweite Förderer (120) benachbart und im Abstand zueinander angeordnet sind;
- der erste Förderer (110) und/oder der zweite Förderer (120) als Bandförderer ausgestaltet sind, die mit ihrer jeweiligen Unterseite (112, 122) dem ersten bzw. zweiten Lagen-Wender (150, 200) zugewandt sind, um die einzelnen Anoden-Lagen (AL) bzw. die einzelnen Kathoden-Lagen (KL) an ihrer Unterseite (112, 122) zu der ersten bzw. der zweiten Übergabestelle (U1, U2) fördern;
- der erste Förderer (110) und/oder der zweite Förderer (120) jeweils ein gesteuertes Unter-/Über-Druck-Förderband aufweisen, und dazu vorgesehen und eingerichtet sind, mittels gesteuertem pneumatischem Unterdruck (p--) die einzelnen Anoden-Lagen (AL) bzw. die einzelnen Kathoden-Lagen (KL) aufzunehmen und während des Förderns zu der ersten bzw. der zweiten Übergabestelle (U1, U2) zu halten; und/oder mittels einem gesteuerten pneumatischen Überdruck (p++) die einzelnen Anoden-Lagen (AL) bzw. die einzelnen Kathoden-Lagen (KL) in der ersten bzw. der zweiten Übergabestelle (U1, U2) an den ersten bzw. zweiten Lagen-Wender (150, 200) abzugeben; und/oder
- der erste und/oder der zweite Lagen-Wender (150, 200) jeweils mehrere Aufnehmer (156, 200) zum Aufnehmen der einzelnen Anoden- oder Kathoden-Lagen (AL, KL) aufweist, die dazu vorgesehen und dazu eingerichtet sind, nacheinander an der jeweiligen Übergabestelle (U1, U2) und der jeweiligen Abgabestelle (A1, A2) kontinuierlich oder getaktet vorbei zu rotieren, und dabei die jeweilige einzelne Anoden- oder Kathoden-Lage (AL, KL) aufzunehmen bzw. abzugeben.

4. Die Vorrichtung nach einem der vorhergehenden Ansprüche, wobei
- der erste und der zweite Lagen-Wender (150, 200) im Wesentlichen einen übereinstimmenden Aufbau, übereinstimmende Funktion und/oder übereinstimmende Abmessungen aufweisen; und/oder
- der erste und der zweite Lagen-Wender (150, 200) dazu vorgesehen und eingerichtet sind, mittels ihres jeweiligen ersten Antriebs (300) im bzw. gegen den Uhrzeigersinn so zu drehen, dass die einzelnen Anoden- bzw. Kathoden-Lagen (AL, KL) von ihrer Übergabestelle (U1, U2) zu ihrer Abgabestelle (A1, A2) unter Vermeidung eines Raums (R) zwischen dem ersten und dem zweiten Lagen-Wender (150, 200) gelangen.

5. Die Vorrichtung nach einem der vorhergehenden Ansprüche, wobei
- die erste und die zweite Übergabestelle (U1, U2) zwischen dem ersten Förderer (110) bzw. dem zweiten Förderer (120) und dem ersten bzw. dem zweiten Lagen-Wender (150, 200) jeweils ein erstes Zentrum haben, sowie die erste bzw. die zweite Abgabestelle (A1, A2) zwischen dem ersten bzw. dem zweitem Lagen-Wender (150, 200) und Stapeltisch (400) jeweils ein zweites Zentrum haben; und wobei
- diese jeweiligen ersten und zweiten Zentren auf jeweiligen Geraden liegen, die ein jeweiliges Drehzentrum (DZ) des ersten Lagen-Wenders (150) bzw. des zweiten Lagen-Wenders (200) im Wesentlichen zumindest annähernd schneiden.

6. Die Vorrichtung nach einem der vorhergehenden Ansprüche, wobei
- der Stapeltisch (400) eine Ablage (420) für die einzelnen Anoden- und Kathoden-Lagen (AL, KL) aufweist; und/oder
- der Stapeltisch (400) eine ein- oder mehrachsige Stelleinrichtung (430) aufweist, die vorgesehen und dazu eingerichtet ist, eine Ablage (420) längs der oder um die jeweilige(n) Achse(n) zu bewegen, um sie zur ersten bzw. zur zweiten Abgabestelle (A1, A2) auszurichten; und/oder
- der Stapeltisch (400) wenigstens einen ersten und wenigstens einen zweiten Klemmfinger (442, 444) aufweist, die dazu vorgesehen und dazu eingerichtet sind, mit der jeweils obersten der Anoden- und Kathoden-Lagen (AL, KL) in oder außer Eingriff zu kommen und/oder die jeweils oberste der Anoden- und Kathoden-Lagen (AL, KL) gegen den Elektroden-Stapel (ES) auf der Ablage (420) zu drängen; und/oder
- die Ablage (420) mit wenigstens einem ersten und wenigstens einem zweiten Klemmfinger (442, 444) um eine z-Achse rotierbar ist; und/oder
- die Ablage (420) mit wenigstens einem ersten und wenigstens einem zweiten Klemmfinger (442, 444) in x- und/oder y-Richtung positionierbar ist.

7. Die Vorrichtung nach einem der vorhergehenden Ansprüche, wobei
- der erste und der zweite Lagen-Wender (150, 200) vorgesehen und dazu eingerichtet sind, die einzelnen Anoden-Lagen (AL) und die einzelnen Kathoden-Lagen (KL) mittels gesteuertem pneumatischem Unterdruck (p--) aufzunehmen und während des Wendens zu der ersten bzw. der zweiten Abgabestelle (A1, A2) zu halten; und/oder mittels einem gesteuerten pneumatischen Überdruck (p++) die einzelnen Anoden-Lagen (AL) und die einzelnen Kathoden-Lagen (KL) in der ersten bzw. der zweiten Abgabestelle (A1, A2) abzugeben um die Lagen (AL, KL) auf einer Ablage (420) zu stapeln; und/oder
- der erste und der zweite Lagen-Wender (150, 200) jeweils eine drehbare Über-/UnterDruck-Verteilung (650) aufweisen, die dazu vorgesehen und dazu eingerichtet ist, die Aufnehmer (156, 206) mit einem gesteuerten pneumatischen Unterdruck (p--) und/oder Überdruck (p++) zu speisen; und/oder
- der erste und der zweite Lagen-Wender (150, 200) dazu vorgesehen und dazu eingerichtet sind, jeweils nur einzelne der Anoden-Lagen (AL) bzw. nur einzelne der Kathoden-Lagen (KL) zu der ersten bzw. der zweiten Abgabestelle (A1, A2) hin zu wenden.

8. Die Vorrichtung nach einem der vorhergehenden Ansprüche, wobei
- eine Stelleinrichtung (430) dazu vorgesehen und dazu eingerichtet ist, eine Ablage (420) beim Stapeln der einzelnen Anoden-Lagen (AL) und einzelnen Kathoden-Lagen (KL) um eine Wegstrecke abzusenken, die einer Dicke einer einzelnen Anoden-Lage (AL) bzw. einer einzelnen Kathoden-Lage (KL) im Wesentlichen entspricht.

9. Die Vorrichtung nach einem der vorhergehenden Ansprüche, wobei
- der erste Antrieb (300) als Drehantrieb ausgestaltet ist, der dazu vorgesehen und dazu eingerichtet ist, den Aufnehmer (156, 206) des jeweiligen Lagen-Wenders (150, 200) zu wenden; und
- der zweite Antrieb (350) einen Drehantrieb (350) mit einer mit dem Aufnehmer (156, 206) getrieblich gekoppelten Exzenterwelle (160, 210) aufweist, um den Aufnehmer (156, 206) des jeweiligen Lagen-Wenders (150, 200) radial zurückzuziehen und/oder auszufahren, oder
- der zweite Antrieb (350) einen Linearantrieb (351) aufweist, der mit einem der Aufnehmer (156, 206) getrieblich gekoppelt ist, um den Aufnehmer des jeweiligen Lagen-Wenders (150, 200) radial zurückzuziehen und/oder auszufahren.

10. Ein Verfahren zur Herstellung von Modulen oder Vorstufen von Modulen, insbesondere von Lagenmaterial enthaltenden Brennstoff- oder Batterie-Zellen, umfassend, zum Beispiel in folgender Reihenfolge, die Schritte:
- Fördern einzelner Anoden-Lagen (AL) zu einer ersten Übergabestelle (U1) zum Übergeben an einen ersten Lagen-Wender (150);
- Fördern einzelner Kathoden-Lagen (KL) zu einer zweiten Übergabestelle (U2) zum Übergeben an einen zweiten Lagen-Wender (200);
- Aufnehmen jeweiliger einzelner Anoden- bzw. Kathoden-Lagen (AL, KL) an der jeweiligen ersten oder zweiten Übergabestelle (U1, U2) mittels entsprechendem Aufnehmer (156, 206) eines jeweiligen ersten bzw. zweiten Lagen-Wenders (150, 200);
- Wenden der aufgenommenen einzelnen Anoden- bzw. Kathoden-Lagen (AL, KL) um einen jeweiligen Rotationswinkel (RW) zu einer jeweiligen ersten bzw. zweiten Abgabestelle (A1, A2);
- Hin-und-Her-Fahren eines Stapeltisches (400) mit einem Antrieb (410) zwischen der ersten und der zweiten Abgabestelle (A1, A2);
- Abgeben der jeweiligen einzelnen Anoden- bzw. Kathoden-Lage (AL, KL) an der ersten bzw. der zweiten Abgabestelle (A1, A2) an den Stapeltisch (400), wenn sich dieser an der ersten bzw. der zweiten Abgabestelle (A1, A2) befindet; und
- radiales Zurückziehen des Aufnehmers (156, 206) des ersten und/oder des zweiten Lagen-Wenders (150, 200), wenn er sich dem Aufnehmer des anderen Lagen-Wenders im Raum zwischen den beiden Lagen-Wendern nähert.

## Claims

1. An apparatus (100) for the production of modules or precursors of modules, in particular of fuel or battery cells containing layer material, wherein
- a first conveyor (110) is provided and adapted to convey individual anode layers (AL) to a first transfer location (U1) for transfer to a first layer turner (150);
- a second conveyor (120) is provided and adapted to convey individual cathode layers (KL) to a second transfer location (U2) for transfer to a second layer turner (200);
- the first and the second layer turners (150, 200) each have at least one pick-up (156, 206) and in each case a first drive (300) and are provided and adapted to pick up a respective one anode or cathode layer (AL, KL) by means of the pick-ups (156, 206) at the respective first or second transfer locations (U1, U2) from the first or second conveyor (110, 120), and rotate it by means of the respective first drive (300) by a respective rotation angle to a respective first or second delivery location (A1, A2);
- a stacking table (400) with a drive (410) is provided and adapted to move back and forth between the first and the second delivery location (A1, A2);
- the first and the second layer turners (150, 200) are provided and adapted to deliver a respective individual anode or cathode layer (AL, KL) from its pick-up (156, 206) to the stacking table (400) at the first and the second delivery location (A1, A2), respectively, when the pick-up (156, 206) is at the first or second delivery location (A1, A2), respectively; and
- the first and the second layer turners (150, 200) each have a second drive (350) for the pick-up (156, 206), which are provided and adapted to radially retract the respective pick-up (156, 206) when it approaches the pick-up (156, 206) of the other layer turner (150, 200) in the space between the two layer turners.

2. The apparatus according to claim 1, wherein
- the first and the second layer turners (150, 200) are provided and adapted to move out the pick-up (156, 206) by means of their respective second drive (350) when the pick-up (156, 206) approaches the respective first or second transfer location (U1, U2) and/or the respective first or second delivery location (A1, A2).

3. The apparatus according to any one of claims 1 to 2, wherein
- the first conveyor (110) and the second conveyor (120) are arranged adjacent to and at a distance from one another;
- the first conveyor (110) and/or the second conveyor (120) are designed as belt conveyors which face the first or second layer turners (150, 200) with their respective underside (112, 122) in order to convey the individual anode layers (AL) or the individual cathode layers (KL) on their underside (112, 122) to the first or second transfer location (U1, U2);
- the first conveyor (110) and/or the second conveyor (120) each have a controlled under-pressure/over-pressure conveyor belt, and are provided and adapted to pick up the individual anode layers (AL) or the individual cathode layers (KL) by means of controlled pneumatic under-pressure (p--) and to hold them during conveying to the first or second transfer location (U1, U2); and/or to deliver the individual anode layers (AL) or the individual cathode layers (KL) at the first or second transfer location (U1, U2) to the first or second layer turners (150, 200) by means of a controlled pneumatic over-pressure (p++); and/or
- the first and/or the second layer turner (150, 200) each has a plurality of pick-ups (156, 200) for picking up the individual anode or cathode layers (AL, KL), which are provided for and set up for the purpose of rotating past the respective transfer location (U1, U2) and the respective delivery location (A1, A2) in a continuous or clocked manner, and in the process to pick up an anode or cathode layer (AL, KL) or to deliver it.

4. The apparatus according to one of the preceding claims, wherein
- the first and the second layer turner (150, 200) have a substantially matching structure, matching function and/or matching dimensions; and/or
- the first and the second layer turner (150, 200) are provided and adapted to rotate clockwise and anti-clockwise respectively by means of their respective first drive (300) in such a way that the individual anode or cathode layers (AL, KL) move from their transfer location (U1, U2) to their delivery location (A1, A2) while avoiding a space (R) between the first and the second layer turner (150, 200).

5. The apparatus according to one of the preceding claims, wherein
- the first and second transfer locations (U1, U2) between the first conveyor (110) and the second conveyor (120) and the first and second layer turners (150, 200), respectively, each have a first center, and the first and second delivery locations (A1, A2) between the first and second layer turners (150, 200) and the stacking table (400), respectively, each have a second center; and wherein
- these respective first and second centers lie on respective straight lines which at least approximately intersect a respective center of rotation (DZ) of the first layer turner (150) or of the second layer turner (200).

6. The apparatus according to one of the preceding claims, wherein
- the stacking table (400) comprises a deposit (420) for the anode and cathode layers (AL, KL); and/or
- the stacking table (400) has an individual-axis or multi-axis positioning device (430) which is provided and adapted to move the deposit (420) along or around the respective anode and cathode layer(s) (A1, A2) in order to align them with the first and second delivery locations (A1, A2), respectively; and/or
- the stacking table (400) has at least one first and at least one second clamping finger (442, 444), which are provided and adapted to come into or out of engagement with the respectively uppermost of the anode and cathode layers (AL, KL) and/or to press the respectively uppermost of the anode and cathode layers (AL, KL) against the electrode stack (ES) on the deposit (420); and/or
- the deposit (420) can be rotated about a z-axis with the clamping fingers (442, 444); and/or
- the deposit (420) can be positioned in the x- and/or y-direction using the clamping fingers (442, 444).

7. The apparatus according to one of the preceding claims, wherein
- the first and the second layer turner (150, 200) are provided and are set up to pick up the individual anode layers (AL) and the individual cathode layers (KL) by means of controlled pneumatic under-pressure (p--) and to hold them during the turning to the first and the second delivery location (A1, A2), respectively; and/or by means of a controlled pneumatic over-pressure (p++) the individual anode layers (AL) and the individual cathode layers (KL) are held during the turning to the first and the second delivery location (A1, A2), respectively the second delivery location (A1, A2); and/or by means of a controlled pneumatic over-pressure (p++) to deliver the individual anode layers (AL) and the individual cathode layers (KL) to the first or second delivery location (A1, A2) in order to stack the layers (AL, KL) on the deposit (420); and/or
- the first and the second layer turners (150, 200) each have a rotatable positive/under-pressure distributor (650), which is provided and adapted to feed the pick-ups (156, 206) with the controlled pneumatic under-pressure (p--) and/or over-pressure (p++); and/or
- the first and the second layer turner (150, 200) are provided and adapted to turn only individual ones of the anode layers (AL) or only individual ones of the cathode layers (KL) towards the first or the second delivery location (A1, A2), respectively.

8. The apparatus according to one of the preceding claims, wherein
- an adjusting device (430) is provided and adapted to lower the deposit (420) during stacking of the individual anode layers (AL) and individual cathode layers (KL) by a path distance from which substantially corresponds to a thickness of an individual anode layer (AL) or an individual cathode layer (KL).

9. The apparatus according to one of the preceding claims, wherein
- the first drive (300) is designed as a rotary drive which is provided and adapted to turn the pick-up (156, 206) of the respective layer turner (150, 200); and
- the second drive (350) has a rotary drive (350) with an eccentric shaft (160, 210) geared to the pick-up (156, 206) in order to radially retract and/or extend the pick-up (156, 206) of the respective layer turner (150, 200), or
- the second drive (350) has a linear drive (351) which is geared to one of the pick-ups (156, 206) in order to radially retract and/or extend the pick-up of the respective layer turner (150, 200).

10. A method for the production of modules or precursors of modules, in particular of fuel or battery cells containing layer material, comprising, for example in the following order, the steps:
- conveying individual anode layers (AL) to a first transfer location (U1) for transfer to a first layer turner (150);
- conveying individual cathode layers (KL) to a second transfer location (U2) for transfer to a second layer turner (200);
- picking up respective individual anode or cathode layers (AL, KL) at the respective first or second transfer locations (U1, U2) by means of a corresponding pick-up (156, 206) of a respective first or second layer turners (150, 200);
- turning the picked up individual anode or cathode layers (AL, KL) by a respective rotation angle (RW) to a respective first or second delivery location (A1, A2);
- moving a stacking table (400) with a drive (410) back and forth between the first and the second delivery location (A1, A2);
- delivering the respective individual anode or cathode layer (AL, KL) at the first or the second delivery location (A1, A2) to the stacking table (400) when the latter is at the first or the second delivery location (A1, A2); and
- radially retracting the pick-up (156, 206) of the first and/or second layer turner (150, 200) when it approaches the pick-up of the other layer turner in the space between the two layer turners.

## Revendications

1. Un dispositif (100) pour la fabrication de modules ou de précurseurs de modules, notamment de cellules à combustible ou de batteries contenant un matériau de couche, dans lequel
- un premier convoyeur (110) est prévu et installé pour transporter les couches d'anodes individuelles (AL) vers un premier point de transfert (U1) pour le transfert vers un premier tourneur de couche (150);
- un deuxième convoyeur (120) est prévu et configuré pour transporter les couches cathodiques individuelles (KL) vers un deuxième point de transfert (U2) pour le transfert vers un deuxième tourneur de couche (200);
- les premier et deuxièmes tourneurs de couche (150, 200) ont chacun au moins un dispositif de prélèvement (156, 206) et chacun a un premier entraînement (300) et sont conçus et équipés pour prélever une couche d'anode ou de cathode individuelle respective (AL, KL) au moyen des dispositifs de prélèvement (156, 206) au premier ou deuxième point de transfert respectif (U1, U2) du premier ou deuxième convoyeur (110, 120) et pour la faire tourner au moyen du premier entraînement respectif (300) d'un angle de rotation respectif vers un premier ou deuxième point de décharge respectif (A1, A2);
- une table d'empilage (400) avec un entraînement (410) est fournie et équipée pour se déplacer d'avant en arrière entre le premier et le deuxième point de livraison (A1, A2);
- les premiers et deuxièmes tourneurs de couche (150, 200) sont fournis et équipés pour livrer une seule couche d'anode ou de cathode (AL, KL) de son récepteur (156, 206) à la table d'empilage (400) aux premier et deuxième points de livraison (A1, A2), respectivement, lorsque le récepteur (156, 206) est situé aux premier et deuxième points de livraison (A1, A2), respectivement; et
- les premiers et deuxièmes tourneurs de couche (150, 200) possèdent chacun un deuxième entraînement (350) pour le capteur (156, 206) qui sont conçus et configurés pour rétracter radialement le capteur respectif (156, 206) lorsqu'il s'approche du capteur (156, 206) de l'autre tourneur de couche (150, 200) dans l'espace entre les deux retourneurs de couche approches.

2. Le dispositif selon la revendication 1, dans lequel
- les premiers et deuxièmes tourneurs de couche (150, 200) sont conçus et équipés pour étendre le ramassage (156, 206) au moyen de leur deuxième entraînement respectif (350) lorsque le ramassage (156, 206) s'approche du premier ou deuxième point de transfert respectif (U1, U2) et/ou du premier ou deuxième point de livraison respectif (A1, A2).

3. Le dispositif selon l'une des revendications 1 à 2, dans lequel
- le premier convoyeur (110) et le deuxième convoyeur (120) sont adjacents et espacés l'un de l'autre;
- le premier convoyeur (110) et/ou le deuxième convoyeur (120) sont conçus comme des convoyeurs à bande, leurs faces inférieures respectives (112, 122) faisant face au les premier et deuxièmes tourneurs de couche (150, 200) afin de transporter les couches d'anode individuelles (AL) ou les couches de cathode individuelles (KL) sur leurs faces inférieures (112, 122) vers le premier ou le deuxième point de transfert (U1, U2);
- le premier convoyeur (110) et/ou le deuxième convoyeur (120) sont chacun équipés d'une bande transporteuse à pression négative/positive contrôlée, et sont conçus et équipés pour saisir les couches d'anode individuelles (AL) ou les couches de cathode individuelles (KL) au moyen d'une pression pneumatique négative contrôlée (p--) et pour les maintenir pendant leur transport vers le premier ou le deuxième point de transfert (U1, U2); et/ou au moyen d'une surpression pneumatique contrôlée (p++) pour transférer les couches anodiques individuelles (AL) ou les couches cathodiques individuelles (KL) au premier ou au deuxième point de transfert (U1, U2) vers le premier ou le deuxième tourneur de couche (150, 200); et/ou
- le premier et/ou le deuxième tourneur de couche (150, 200) comporte chacun plusieurs récepteurs (156, 200) destinés à recevoir les couches anodiques ou cathodiques individuelles (AL, KL), qui sont conçus et configurés pour tourner en continu ou par intermittence devant le point de transfert respectif (U1, U2) et le point de livraison respectif (A1, A2) successivement, recevant ou livrant ainsi la couche anodique ou cathodique individuelle respective (AL, KL).

4. Le dispositif selon l'une des revendications précédentes, dans lequel:
- les premiers et deuxièmes tourneurs de couche (150, 200) ont essentiellement la même construction, la même fonction et/ou les mêmes dimensions; et/ou
- les premiers et deuxièmes tourneurs de couche (150, 200) sont conçus et équipés pour tourner dans le sens horaire ou antihoraire au moyen de leur premier entraînement respectif (300) afin que les couches individuelles d'anode et de cathode (AL, KL) soient transférées de leur point de transfert (U1, U2) à leur point de livraison (A1, A2) tout en évitant un espace (R) entre les premiers et deuxièmes tourneurs de couche (150, 200).

5. Le dispositif selon l'une des revendications précédentes, dans lequel
- les premier et deuxième points de transfert (U1, U2) entre le premier convoyeur (110) et le deuxième convoyeur (120) et le premier et le deuxième retourneur de couche (150, 200) ont chacun un premier centre, et les premier et deuxième points de déchargement (A1, A2) entre le premier et le deuxième tourneur de couche (150, 200) et la table d'empilage (400) ont chacun un deuxième centre; et dans lequel
- ces premier et deuxième centres respectifs se trouvent sur des lignes droites respectives qui intersectent sensiblement un centre de rotation respectif (DZ) du premier tourneur de couche (150) et du deuxième tourneur de couche (200).

6. Le dispositif selon l'une des revendications précédentes, dans lequel:
- la table d'empilage (400) comporte une zone de stockage (420) pour les couches individuelles d'anode et de cathode (AL, KL); et/ou
- la table d'empilage (400) comporte un dispositif de positionnement mono- ou multi-axes (430) conçu pour déplacer un plateau (420) le long ou autour du ou des axes respectifs afin de l'aligner avec le premier ou le deuxième point de distribution (A1, A2); et/ou
- la table d'empilage (400) comporte au moins un premier et au moins un deuxième doigt de serrage (442, 444) conçus pour s'engager ou se désengager avec les couches supérieures respectives de l'anode et de la cathode (AL, KL) et/ou pour presser les couches supérieures respectives de l'anode et de la cathode (AL, KL) contre l'empilement d'électrodes (ES) sur le plateau (420); et/ou
- le plateau (420) peut tourner autour d'un axe z grâce à au moins un premier et au moins un deuxième doigt de serrage (442, 444). et/ou
- le stockage (420) peut être positionné dans la direction x et/ou y avec au moins un premier et au moins un deuxième doigt de serrage (442, 444).

7. Le dispositif selon l'une des revendications précédentes, dans lequel
- les premiers et deuxièmes tourneurs de couche (150, 200) sont prévus et configurés pour saisir les couches anodiques individuelles (AL) et les couches cathodiques individuelles (KL) au moyen d'une pression pneumatique négative contrôlée (p--) et pour les maintenir pendant leur retournement vers les premier et deuxième points de distribution (A1, A2) ; et/ou pour distribuer les couches anodiques individuelles (AL) et les couches cathodiques individuelles (KL) aux premier et deuxième points de distribution (A1, A2) au moyen d'une pression pneumatique positive contrôlée (p++) afin d'empiler les couches (AL, KL) sur un plateau (420) ; et/ou
- les premiers et deuxièmes tourneurs de couche (150, 200) sont chacun dotés d'un distributeur de sur/sous-pression rotatif (650) conçu et équipé pour alimenter les récepteurs (156, 206) avec une sous-pression pneumatique contrôlée (p--) et/ou une surpression (p++); et/ou
- les premiers et deuxièmes tourneurs de couche (150, 200) sont conçus et équipés pour retourner uniquement des couches anodiques individuelles (AL) ou uniquement des couches cathodiques individuelles (KL) vers le premier ou le deuxième point de livraison (A1, A2), respectivement.

8. Le dispositif selon l'une des revendications précédentes, dans lequel
- un dispositif d'actionnement (430) est prévu et configuré pour abaisser un plateau de stockage (420) lors de l'empilement des couches d'anode individuelles (AL) et des couches de cathode individuelles (KL) d'une distance qui correspond sensiblement à l'épaisseur d'une couche d'anode individuelle (AL) ou d'une couche de cathode individuelle (KL).

9. Le dispositif selon l'une des revendications précédentes, dans lequel:
- le premier entraînement (300) est conçu comme un entraînement rotatif, prévu et configuré pour faire tourner le récepteur (156, 206) du tourneur de couche respectif (150, 200); et
- le second entraînement (350) comporte un entraînement rotatif (350) avec un arbre excentrique ( 160, 210) couplé par engrenage au récepteur (156, 206) afin de rétracter et/ou d'étendre radialement le récepteur (156, 206) du tourneur de couche respectif (150, 200).
- le deuxième entraînement (350) possède un entraînement linéaire (351) qui est couplé par engrenage à l'un des récepteurs (156, 206) afin de rétracter et/ou d'étendre radialement le récepteur du tourneur de position respectif (150, 200).

10. Une méthode de fabrication de modules ou de précurseurs de modules, notamment de piles à combustible ou de batteries contenant un matériau stratifié , comprenant, par exemple dans l'ordre suivant, les étapes suivantes:
- transport les couches d'anode individuelles (AL) vers un premier point de transfert (U1) pour transfert vers un premier tourneur de couche (150);
- transport les couches cathodiques individuelles (KL) vers un deuxième point de transfert (U2) pour le transfert vers un deuxième tourneur de couche (200);
- accueillir les couches individuelles d'anode ou de cathode (AL, KL) au premier ou deuxième point de transfert respectif (U1, U2) à l'aide d' un dispositif de prélèvement correspondant (156, 206) d'un première ou deuxième tourneur de couche respectif (150, 200);
- retourner les couches individuelles d'anode ou de cathode prélevées (AL, KL) d' un angle de rotation respectif (RW) vers un premier ou deuxième point de livraison respectif (A1, A2);
- déplacer une table d'empilage (400) d'avant en arrière à l'aide d'un entraînement (410) entre les premier et deuxième points de distribution (A1, A2);
- distribuer de la couche d'anode ou de cathode individuelle (AL, KL) respective au premier ou deuxième point de distribution (A1, A2) sur la table d'empilage (400) lorsque celle-ci est positionnée à ce point; et
- retirer radiale le récepteur (156, 206) du premier et/ou du deuxième tourneur de couche (150, 200) lorsqu'il approche le récepteur de l'autre tourneur de couche dans l'espace entre les deux tourneurs.
